Europäisches Patentamt

(19) European Patent Office

Office européen des brevets

(11) Publication number: **0 057 962**
**B1**

(12) **EUROPEAN PATENT SPECIFICATION**

(45) Date of publication of patent specification: 31.07.85

(21) Application number: 82200142.6

(22) Date of filing: 08.02.82

(51) Int. Cl.⁴: **C 08 F 10/00,** C 08 F 2/04, C 08 F 2/06

(54) **Process for the polymerization of a polymerizable monomer, and installation for polymerization reactions.**

(30) Priority: **11.02.81 NL 8100643**

(43) Date of publication of application:
**18.08.82 Bulletin 82/33**

(45) Publication of the grant of the patent:
**31.07.85 Bulletin 85/31**

(84) Designated Contracting States:
**AT BE DE FR GB IT NL SE**

(56) References cited:
**GB-A-1 126 240**
**US-A-2 984 657**
**US-A-3 289 569**

(73) Proprietor: **STAMICARBON B.V.**
**Postbus 10**
**NL-6160 MC Geleen (NL)**

(72) Inventor: **Wassen, Willem Joseph**
**Moutheuvel 4a**
**NL-6365 AZ Schinnen (NL)**
Inventor: **Schuren, Johannes Pieter**
**Luther Kingstraat 2**
**NL-6191 BX Beek (NL)**

(74) Representative: **Hoogstraten, Willem Cornelis**
**Roeland et al**
**OCTROOIBUREAU DSM Postbus 9**
**NL-6160 MA Geleen (NL)**

Courier Press, Leamington Spa, England.

## Description

The invention relates to a process for the transfer of heat from fluid mixtures containing a polymerizable monomer and an active polymerization catalyst. In such mixtures, polymerization may occur and polymer will normally be present. The mixtures contain a dispersing agent, which may be identical with the polymerizable monomer. For convenience, the mixtures in question will herein after be referred to as 'live polymer dispersions'. In other words the invention relates to a process for the polymerization of a polymerizable monomer in which such live polymer dispersions occur, and to an installation for polymerization reactions involving the cooling of such live polymer dispersions.

Here-after, the invention will be elucidated mainly on the basis of this kind of mixture.

It is known and usual to transfer reaction heat, during the polymerization of a monomer, e.g. a l-alkene, from the live polymer dispersion formed. This may for instance be done by cooling through the reactor wall, or by evaporation of monomer and/or dispersing agent. However, the amount of heat which can reasonably and without extreme cost be transferred in this way is limited, because the area of heat exchange of the wall and the area of evaporation are limited and can be extended only at high cost.

It is also possible to transfer heat from a live polymer dispersion by external cooling, i.e. by leading the live polymer dispersion from the reactor or other containing vessel through an external cooler and feeding the cooled dispersion back to the vessel (U.S. patent specification 2,984,657). In this way, the area of heat exchange is no longer dependent on the size and shape of the said vessel, so that, if desired, this area may be extended in order to be able to transfer more heat. A major problem here, however, is the caking in the external cooler, caused by the continuation of the polymerization in the live dispersion during passage through the external cooler. This caking gives rise to an increased flow resistance in the cooler and a decreased heat-exchanging capacity, so that before long the cooler becomes useless and has to be put out of use. The smaller the diameter of the channels to be passed by the live dispersion, the more urgent this caking problem becomes. In the known process is it tried to counteract the caking in the external cooler by applying conditions of laminar flow outside the polymerization reactor. This implies however the serious disadvantage that with laminar flow in the cooler the heat transfer is much lower than with turbulent flow, so that in the known process the external cooler is little effective.

The invention aims at meeting the want for a possibility to transfer heat from a live polymer dispersion without limitations as to the amount of heat to be transferred, and without caking problems.

According to the invention, heat is transferred from a fluid mixture containing a polymerizable monomer and an active polymerization catalyst, characterized in that the mixture is cooled by means of a spiral heat exchanger.

Spiral heat exchangers are known per se. They involve two separate spiral channel systems coiled together and thus in heat-exchange relation with each other. Through one channel system the medium to be cooled is passed, through the other channel system the cooling liquid, e.g. in counterflow. Such heat exchangers are described for instance in the U.S. patent specification 3,289,569 and British patent specification 1,126,240. In order to attain an area of heat exchange which is maximally large relative to the volume, the channels to be passed by both the media are fine, and therefore narrow and susceptible to caking. Because of this such heat exchangers have always been supposed to be particularly unsuited for the cooling of live polymer dispersions, in which caking is a central problem. Consequently, it is very surprising that spiral heat exchangers have now been found to be applicable for the cooling of live polymer dispersions right enough, and even with great advantage. In the process according to the invention it is without problem possible to run the spiral heat exchanger under conditions of turbulent flow.

The invention makes it possible to transfer heat from a live polymer dispersion in a very effective way, within equipment occupying little space, and in an amount which is in essence unlimited, that is, independent of the geometry of the vessel in question, whilst caking can be countered effectively.

By preference, a heat exchanger with a plane spiral is applied. Such a spiral heat exchanger is described in the British patent specification 1,126,240 already mentioned, and in the booklet 'Spiral heat exchangers' by the Alfa-Laval company (1973), to which publications reference is made for brevity.

According to the invention, care is taken that the active catalyst particles in the live polymer dispersion are loaded with polymer before the dispersion is fed to the spiral heat exchanger. This is achieved by the process of claim 1. As soon as the active catalyst particles are loaded with a sufficient quantity of polymer, the circulation of the contents of the polymerization reactor through the spiral heat exchanger for cooling may start. In most cases a load up to 100 g polymer per g of solid catalyst particles is sufficient in the pre-polymerization. By preference, a load of 10—50 g/g is applied. Higher loads are possible, but do not offer any advantage. The pre-polymerization takes about 5—100 minutes, depending on the reaction conditions. Preferably, a pre-polymerization time of 10—50 minutes is used.

According to one mode of realizing the process according to the invention in a continuous process pre-polymerization is carried out in a first (pre-)polymerization reactor without a spiral heat exchanger, the reaction mixture obtained is fed to a second (main) polymerization reactor, and at least part of the reaction mixture from the main polymerization reactor is cooled by means of a spiral heat exchanger.

The invention is mainly applied in the polymerization of alkenes, whether or not in the presence of other monomers, in particular suspension polymerization, i.e. polymerization under such reaction conditions that the polymer obtained forms a suspension in a dispersing agent. However, the invention may also be applied in solution polymerization, i.e. polymerization under such conditions that the polymer formed dissolves in the dispersing agent used. The polymerization temperature is usually between 190 and 475 K, preferably between 310 and 375 K. The pressure may be, for instance, between 100 and 3000 kPa.

In particular, the alkenes are l-alkenes with 2—10 carbon atoms in the molecule, e.g. ethylene, propylene, l-butene or l-hexene, or combinations of these. In copolymerization both random and block copolymerization are possible. The invention is particularly suitable for the stereospecific polymerization of propylene, whether or not in the presence of secondary amounts of ethylene, e.g. not more than 30, more in particular between 1 and 15 % by weight of ethylene. The process according to the invention is especially important for the preparation of isotactic polypropylene, random copolymers of propylene with subordinate amounts of ethylene, and block copolymers of propylene and ethylene. For the preparation of block copolymers the monomers can be added in any desired order. The invention may also be applied with advantage in the polymerization of l-butene or 4-methyl-l-pentene.

For a dispersing agent, any known dispersant can be applied, depending on the reaction conditions chosen. The dispersing agent may be inert or a liquid-phase monomer. Examples of suitable dispersants are aliphatic, cyclo-aliphatic, aromatic and aliphatic-aromatic hydrocarbons with 3—8 carbon atoms in the molecule, such as propylene, l-butene, butane, isobutane, n-hexane, n-heptane, cyclohexane, benzene, toluene and the xylenes.

The polymerization catalyst is in particular of the Ziegler-Natta-type. As is known such a catalyst contains a compound of a transitionmetal, usually from groups IV—VI of the periodic table, in particular vanadium and/or titanium. In the stereospecific polymerization of propylene or higher alkenes nearly always use is made of a titanium compound. The invention is applicable with any known variant of such a catalyst. Especially with $TiCl_3$ for a catalyst component, good results are obtained. The $TiCl_3$ may have been produced by, for instance, reduction in $TiCl_4$ with aluminium metal, with hydrogen, or with an organometallic compound, e.g. an organoaluminium compound. The transition-metal component of the catalyst may contain a supporting material, e.g. silica, alumina or a magnesium halide. Besides the transition-metal component, the complete polymerization catalyst usually contains an organometallic component derived from groups I—III of the periodic table, with a hydrocarbon group bound direct to the metal, e.g. an organo-aluminium or organomagnesium compound.

The polymerization catalyst may also be of a different type, e.g. a catalyst on the basis of chromium oxide. Of such catalysts too, any known variant may be used.

The polymerization may be carried out in the presence of the various known additives, such as activators, modifiers, molecular weight control agents, etcetera.

The invention will be elucidated on the basis on the annexed drawing, which is a schematic representation of a possible installation according to the invention.

Through lines 1 and 2, one or more polymerizable monomers, e.g. ethylene and/or propylene, are fed to a pre-polymerization reactor 3, optionally together with a suitable dispersing agent. Through line 4 the polymerization catalyst is added, optionally together with a dispersant. In pre-polymerization reactor 3 polymerization occurs to such a degree that at the outlet the catalyst particles are loaded with a sufficient quantity of polymer, as specified above. Through lines 5 and 6 the live polymer dispersion is fed to main polymerization reactor 7, to which the polymerizable monomer(s) is/are fed through lines 1 and 8. Live polymer dispersion is continuously drawn off from reactor 7 through line 9. Through line 10 live polymer dispersion is fed to inlet 11 of spiral heat exchanger 12, which has a plane spiral and is of the type described in the booklet 'Spiral heat exchangers' by the Alfa-Laval company (1973). The live polymer dispersion is cooled with cooling water in this heat exchanger, to the effect that the temperature in reactor 7 is constantly kept at the value desired for polymerization. In the heat exchanger the dispersion flows inwards through the spiral to the outlet in the centre (the cooling water flows through a continuous coil in counterflow). Through lines 13 and 6 the dispersion is passed back to reactor 7. Through line 14, part of the live polymer dispersion is drawn off to be processed to final polymer.

The invention will be elucidated in the following non-restrictive examples.

Example I (comparative)

Propylene is polymerized in suspension, at a temperature of 343 K and a mean pressure of 750 kPa, with gasoline as dispersing agent and with commercial $TiCl_3 \cdot 1/3 \; AlCl_3$ and diethylaluminium-chloride in a weight ratio of 1:2 as catalyst. The propylene is supplied at such a rate that optimum productivity is attained. By productivity is meant here the weight of polypropylene, in kg, obtained per hour and per $m^3$ of reactor volume. By adding hydrogen and melt index of the polymer is set at 10 dg/min (ISO R 1133; 503 K/21.6 N).

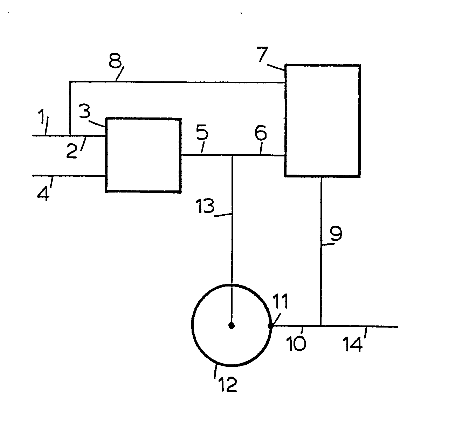

Reaction heat is removed by circulating the reactor contents along a spiral heat exchanger as described with reference to the drawing diagram. The temperature of the cooling water is 288 K. At first, a productivity of 39 kg/h·m³ is attained as compared to 24 kg/h·m³ if the spiral heat exchanger is not applied). After ten days the spiral has clogged to such an extent that the process must be stopped.

Clearly, application of the spiral heat exchanger makes possible a considerable increase in the productivity, but only for a limited time.

Example II

The process according to Example I is repeated, but the spiral heat exchanger is not used until the polypropylene has been prepolymerized to a load of 35 g polymer per g of solid catalyst particles. This takes about 25 min.

It appears to be possible to maintain a productivity of 39 kg/h·m³ for a practically unlimited time. After 30 days there is hardly any caking in the coil of the spiral heat exchanger at all.

Example III (comparative)

Under the same reaction conditions as in Example I, a crystalline block copolymer of propylene and ethylene is prepared, with an ethylene content of 8 % by weight and a melt index (503 K/21.6 N) of 6. At first propylene is polymerized during $3\frac{1}{2}$ h, and subsequently during $1\frac{1}{2}$ h propylene and ethylene together in a weight ratio of 30:70. The monomers are again supplied in such a rate that optimum productivity is attained. The $H_2$ concentration is 2 % by volume, measured in the gas phase in the polymerization reactor.

When the spiral heat exchanger is not used, the productivity amounts to 22 kg/h·m³, but when it is, to 36 kg/h·m³. After some time, the latter productivity decreases by the coil beginning to clog.

Example IV

The process according to Example III is repeated with application of the spiral heat exchanger, which, however, is not used until the propylene has been pre-polymerized during about 15 minutes to a load of 16 g polymer per g of solid catalyst particles.

It appears to be possible to maintain a productivity of 36 kg/h·m³ for a practically unlimited time (more than 30 days). Hardly any caking at all occurs in the coil of the spiral heat exchanger.

**Claims**

1. Process for the polymerization of a polymerizable monomer, characterized in that the monomer is subjected to a pre-polymerization until a load of at least 5 g polymer from g of solid catalyst particles is obtained, in that next the reaction mixture obtained is polymerized further during a main-polymerization, and in that during the main-polymerization at least part of the live polymerization mixture is subjected to cooling by means of a spiral heat exchanger while maintaining a turbulent flow of the live polymerization mixture in the spiral heat exchanger.

2. Process according to claim 1, characterized in that during the pre-polymerization the monomer is polymerized to such an extent that the solid catalyst particles are loaded with 5 to 100 g polymer per g of solid catalyst particles.

3. Process according to claim 1 or 2, characterized in that the prepolymerization is effected continuously in a pre-polymerization reactor, in that reaction mixture is withdrawn from this pre-polymerization reactor, and in that this withdrawn reaction mixture is fed to the main-polymerization reactor, in which reactor the main-polymerization is effected continuously.

4. Process according to one of the claims 1—3, characterized in that a l-alkene with 2—10 carbon atoms in the molecule is polymerized.

5. Process according to any one of the claims 1—4, characterized in that a suspension polymerization is carried out.

6. Process according to any one of the claims 1—5, characterized in that a Ziegler-Natta catalyst is applied.

7. Process according to one of the claims 1—5, characterized in that a polymerization catalyst on the basis on chromium oxide is applied.

8. Installation for the polymerization of polymerizable monomers in which live polymerization mixtures are cooled externally, comprising a pre-polymerization reactor with a line to a main-polymerization reactor fitted with a circulation line, which circulation line contains a spiral heat exchanger.

**Patentansprüche**

1. Verfahren zur Polymerisation eines polymerisierbaren Monomers, dadurch gekennzeichnet, daß das Monomer einer Vorpolymerisation unterzogen wird, bis eine Beladung von mindestens 5 g Polymer je g fester Katalysatorteilchen erreicht ist, daß als nächstes das erhaltene Reaktionsgemisch während einer Hauptpolymerisation weiterpolymerisiert wird, und daß während der Hauptpolymerisation mindestens ein Teil des "live"-Polymerisationsgemisches mittels eines Spiralwärmeaustauschers gekühlt wird, während turbulentes Fließen des "live"-Polymerisationsgemisches in Spiralwärmeaustauscher aufrechterhalten wird.

2. Verfahren nach Anspruch 1, dadurch gekennzeichnet, daß während der Vorpolymerisation das Monomer bis zu einem solchen Ausmaß polymerisiert wird, daß die festen Katalysatorteilchen mit 5 bis 100 g Polymer je g fester Katalysatorteilchen beladen werden.

3. Verfahren nach Anspruch 1 oder 2, dadurch gekennzeichnet, daß die Vorpolymerisation kontinuierlich in einem Vorpolymerisationsreaktor durchgeführt wird, daß das Reaktionsgemisch aus diesem Vorpolymerisationsreaktor ausgetragen wird, und daß dieses ausgetragene Reaktionsgemisch dem Hauptpolymerisationsreaktor zugeführt wird, in welchem Reaktor die Hauptpolymerisation kontinuierlich erfolgt.

4. Verfahren nach einem der Ansprüche 1—3, dadurch gekennzeichnet, daß ein I-Alken mit 2—10 Kohlenstoffatomen im Molekül polymerisiert wird.

5. Verfahren nach einem der Ansprüche 1—4, dadurch gekennzeichnet, daß eine Suspensionspolymerisation durchgeführt wird.

6. Verfahren nach einem der Ansprüche 1—5, dadurch gekennzeichnet, daß ein Ziegler-Natta-Katalysator verwendet wird.

7. Verfahren nach einem der Ansprüche 1—5, dadurch gekennzeichnet, daß ein Polymerisationskatalysator auf der Basis von Chromoxid verwendet wird.

8. Einrichtung für die Polymerisation von polymerisierbaren Monomeren, in welcher "live"-Polymerisationsgemische von außen gekühlt werden, umfassend einen Vorpolymerisationsreaktor mit einer Leitung zu einem mit einer Zirkulationsleitung versehenen Hauptpolymerisationsreaktor welche Zirkulationsleitung einen Spiralwärmeaustauscher enthält.

**Revendications**

1. Procédé de polymérisation d'un monomère polymérisable, caractérisé en ce qu'on soumet le monomère à une prépolymérisation jusqu'à obtenir une charge d'au moins 5 g de polymère par g de particules solides de catalyseur, en ce qu'on polymérise ensuite le mélange de réaction obtenu encore plus en une polymérisation principle, et en ce que pendant la polymérisation principale, on soumet une partie au moins du mélange polymère vivant au refroidissement à l'aide d'un échangeur de chaleur spiralé tout en maintenant un écoulement turbulent du mélange polymère vivant dans l'échangeur de chaleur spiralé.

2. Procédé selon la revendication 1, caractérisé en ce que pendant la prépolymérisation, on polymérise le monomère à un degré tel que les particules solides de catalyseur sont chargés de 5 à 100 g de polymère par g de particules solides du catalyseur.

3. Procédé selon la revendication 1 ou 2, caractérisé en ce qu'on effectue la prépolymérisation en continu dans un réacteur de prépolymérisation, en ce qu'on soutire le mélange de réaction du réacteur de prépolymérisation, et en ce qu'on envoie le mélange de réaction soutiré dans le réacteur de polymérisation principal dans lequel on effectue en continu la polymérisation principale.

4. Procédé selon l'une quelconque des revendications 1 à 3, caractérisé en ce qu'on polymérise un alcène-l contenant de deux à dix atomes de carbone dans la molécule.

5. Procédé selon l'une quelconque des revendications 1 à 4, caractérisé en ce qu'on effectue une polymérisation en suspension.

6. Procédé selon l'une quelconque des revendications 1 à 5, caractérisé en ce qu'on applique un catalyseur Ziegler-Natta.

7. Procédé selon l'une quelconque des revendications 1 à 5, caractérisé en ce qu'on applique un catalyseur de polymérisation à base d'oxyde de chrome.

8. Installation de polymérisation de monomères polymérisables, dans laquelle les mélanges polymères vivants sont refroidis extérieurement, comprenant un réacteur de prépolymérisation avec un conduite au réacteur de polymérisation principal comportant une conduite de circulation, cette conduite de circulation contenant un échangeur de chaleur spiralé.

0 057 962